# EUROPEAN PATENT SPECIFICATION

(11) **EP 3 981 358 B1**
(45) Date of publication and mention of the grant of the patent: **07.06.2023**
(21) Application number: 20200793.6
(22) Date of filing: 08.10.2020
(51) Int. Cl.: A61C 7/30, A61C 7/28, A61C 7/12, A61C 7/14

(54) **SELF-LIGATING BRACKET AND CLIP**
SELBSTLIGIERENDE KLAMMER UND CLIP
ATTACHE AUTO-LIGATURANTE ET CLIPS

(43) Date of publication of application: 13.04.2022
(73) Proprietor: Hirsch Dynamics Holding AG, 8832 Wollerau (CH)
(72) Inventor: HIRSCH, Markus, 8832 Wollerau (CH)
(74) Representative: Torggler & Hofmann Patentanwälte - Innsbruck

(56) References cited:
- EP-B1- 3 419 553

## Description

The present invention relates to a ligating clip for a self-ligating orthodontic bracket, with the features of the preamble of claim 1 and a self-ligating orthodontic bracket having at least one such ligating clip.

A ligating clip with the features of the preamble of claim 1 and a self-ligating orthodontic bracket having such a clip is shown in EP 3 419 553 B1.

The ligating clip, made of superelastic material, is approximately U-shaped with a labial arm, a lingual arm and a connecting arm connecting the labial arm and the lingual arm and has three fingers on a free end of its labial arm.

A locking element in form of a hook is provided at a free end of the lingual arm, the hook protruding in a lingual-labial direction. The hook is manufactured by stamping with bending down or up the free end of the lingual arm such that the hook has three cut sides (two of them running in a gingival-occlusal direction and one of them running in a mesial-distal direction) and is connected to the material of the lingual arm by a single side (running in a mesial-distal direction). Due to the stamping, the hook extends generally in a lingual-labial direction. The hole produced as a consequence of the stamping is completely surrounded by material of the lingual arm (in other words, it is not open at any side of the lingual arm). In a view along the lingual-labial direction, the hook is only minimally distanced from the three sides.

In an inserted state in which the ligating clip is inserted in a self-ligating bracket, the lingual arm runs through an occlusal-gingival channel which has two sections of different clearance and separated from each other by a step. The section at the occlusal side has a higher clearance and allows the hook to slide freely and the other section has a lower clearance to stop the hook in a position in which the archwire slot is open such that an archwire can be inserted into or removed from the archwire slot. In this way, a loss of the clip in the open position can be avoided. In the closed position the clip is locked by its elastic force only, not by a dedicated locking element.

During use the archwire will apply varying forces on the ligating clip.

A different concept of a ligating clip in which cutouts are used to provide locking elements in a closed position of the clip is shown in US 9,345,558 B2 and US 10,555,793 B2.

It is an object of the invention to develop a ligating clip and a self-ligating orthodontic bracket that are easy to fabricate, easy to assemble and securely fastened.

This object is accomplished by a clip for a self-ligating orthodontic bracket having the features of claim 1 and a self-ligating orthodontic bracket having at least one such ligating clip. Preferred embodiments of the invention are defined in the dependent claims.

In the present disclosure a coordinate system is used which is attached to a labial tooth surface on the mandible. This is not to be understood in a limiting way. The invention can be practiced irrespective of the position of the tooth and irrespective of the tooth surface. By way of example, a ligating clip and a self-ligating orthodontic bracket according to the invention could also be used with a labial or lingual surface of a tooth of the maxilla.

A ligating clip and a self-ligating orthodontic bracket according to the invention will have the following pairs of direction:
- lingual-labial
- mesial-distal
- gingival-occlusal

In the present disclosure the term "connected to" is not to be construed as implying that the objects connected to each other would have to be separate physical parts. By way of example, with respect to the ligating clip, although it is stated that the labial arm and the lingual arm are connected to the connecting arm it is possible - even preferred - that the ligating clip is made of a single physical part.

The ligating clip is made of superelastic material and is approximately U-shaped with a labial arm, a lingual arm and a connecting arm connecting the labial arm and the lingual arm and has one, two or three fingers on a free end of its labial arm.

A locking element in form of a hook is provided at a free end of the lingual arm, the hook protruding in a lingual-labial direction. In an inserted state in which the ligating clip is inserted in a self-ligating bracket, the lingual arm runs through an occlusal-gingival channel which has two sections of different clearance and which are separated from each other by a step. The section at the occlusal side has a higher clearance and allows the hook to slide freely and the other section has a lower clearance to stop the hook in a position in which the archwire slot is open such that an archwire can be inserted into or removed from the archwire slot. In this way, a loss of the clip in the open position can be avoided. In the closed position the clip is locked by its elastic force only, not by a dedicated locking element, namely, the fingers are held in the cavities of the occlusal wall of the bracket by friction due to the downward spring force of the clip on the floor of the cavities. Of course, during insertion of the clip, in the gingival section the hook is pressed into the plane of the lingual arm which is possible due to the elasticity of the hook. Once the section having higher clearance is reached, the hook is released back into its state protruding from the plane of the lingual arm.

Due to the cutout the clip is better suited to endure the forces acted upon by the archwire because the cutout increases the elasticity of the clip resulting in a securely fastened clip. Due to the increased elasticity assembly of the clip and the bracket is easier because a hook having a smaller width can be used. The cutout and the hook can easily be produced by stamping with bending down or up.

In some embodiments of the clip the at least one cutout has at least one mesial-distal border and at least one gingival-occlusal border.

In some embodiments of the clip the hook, in a view along the lingual-labial direction, has a length and is distanced from at least one mesial-distal border and from at least one gingival-occlusal border by at least half of its length.

In some embodiments of the clip the at least one cutout, in a view along the lingual-labial direction, is generally L-shaped. With respect to these embodiments it can be provided that a shape of the lingual arm due to the cutout is given by a gingival section, a protrusion connected to the gingival section, the protrusion running in the gingival-occlusal direction and having a smaller width along the mesial-distal direction than the gingival section, and, preferably, a transversal part running in the mesial-distal direction, the transversal part being connected on one end to the protrusion and on a further end to the hook.

In some embodiments of the clip the labial arm is provided with a mesial finger and a distal finger, only. Alternatively, a single finger or an additional (mesial) finger could be provided.

In some embodiments, the clip can be slid open and closed with the aid of an aperture for a tool.

In some embodiments, the clip is provided with only one cutout such that, in a view along the lingual-labial direction, the clip is of asymmetric design due to the presence of the cutout.

Preferably, the clip is made of superelastic material, e.g., a Ni-Ti alloy.

In some embodiments, the hook protrudes from a lingual surface of the lingual arm. Alternatively, it could be provided that the hook protrudes from a labial surface of the lingual arm (of course, the position of the step in the occlusal-gingival channel has to be adapted accordingly).

Preferably, the clip can be provided with a coating minimizing the amount of Ni leaching from the clip (in case a Ni-Ti alloy is used) and/or improving the aesthetics of the clip.

In some embodiments of the bracket it is provided with an occlusal-gingival channel which has two sections of different clearance and which are separated from each other by a step such that, in a position in which the archwire slot is open, the hook acts together with step to prevent a separation of the clip from the bracket.

Preferably, the bracket is made of ceramics, metals, or polymeric materials.

Optional tie-wings of the bracket can be used to apply bands

With the exception of the provision of a cutout as described in this document, the clip and the bracket can have the features described in EP 3 419 553 B1.

In the drawings, the figures show:
- Fig. 1: a ligating clip in isometric view
- Fig. 2a-c: the clip of Fig. 1 in a view along a lingual-labial direction, a gingival-occlusal direction and a mesial-distal direction, respectively
- Fig. 3a,b: a self-ligating bracket having a clip according to Fig. 1 and 2 in two different isometric views
- Fig. 4a,b: the bracket of Fig. 3 in a view along a gingival-occlusal direction with and without inserted clip, respectively
- Fig. 5: the bracket of Fig. 4b in an isometric view
- Fig. 6: a cut view of the bracket of Fig. 4a
- Fig. 7: an alternative embodiment of a ligating clip in a view along a lingual-labial direction

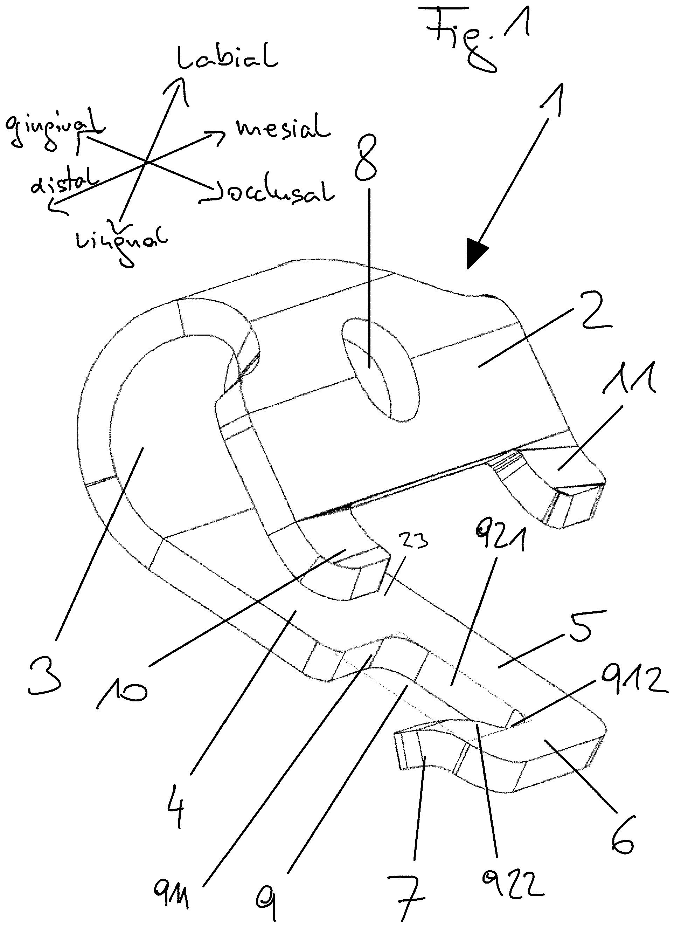

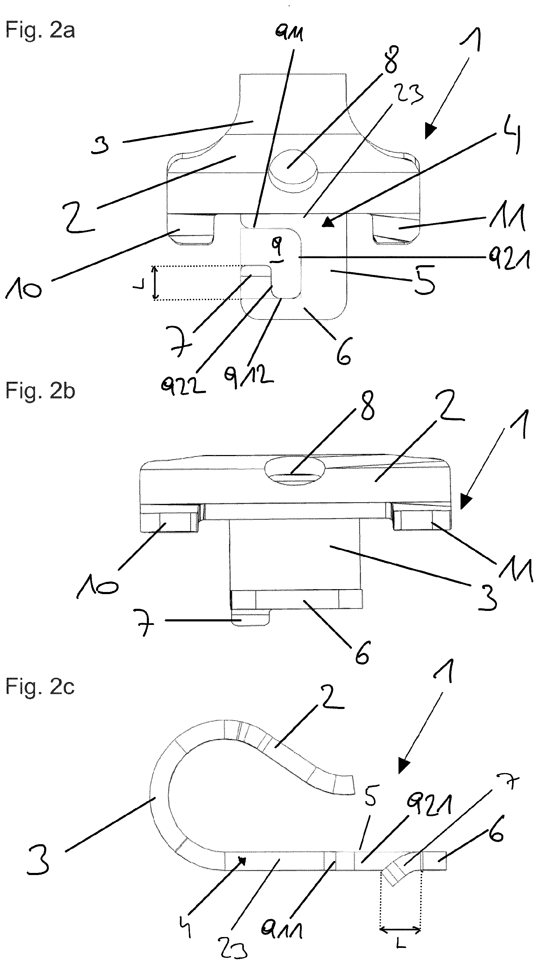

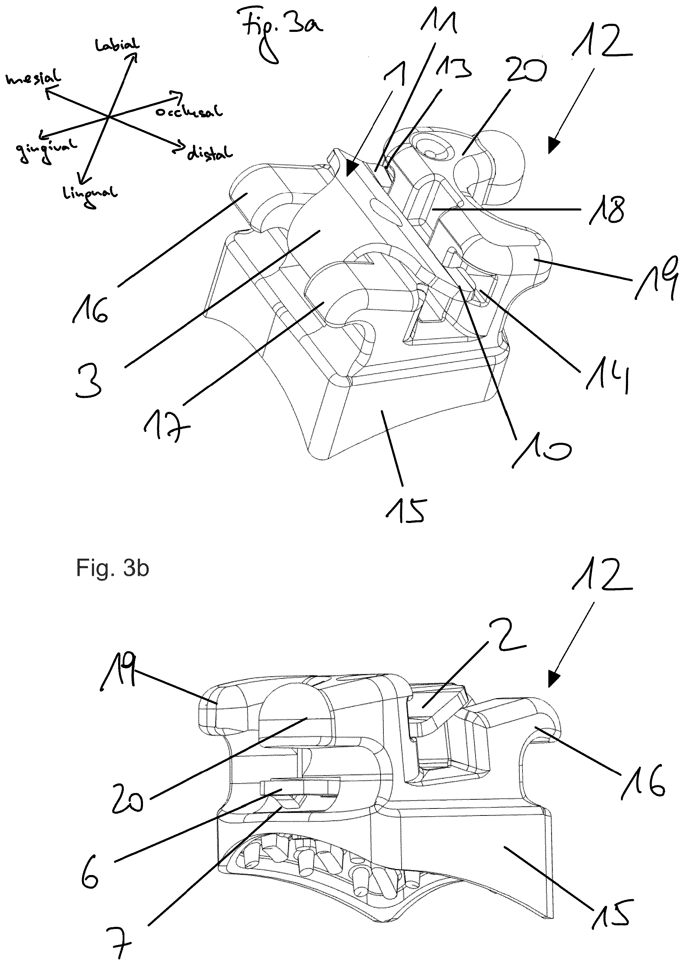

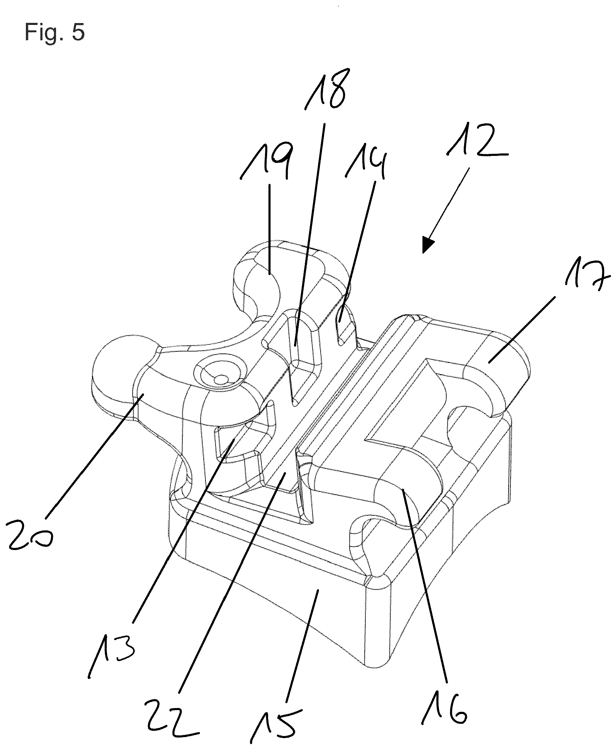

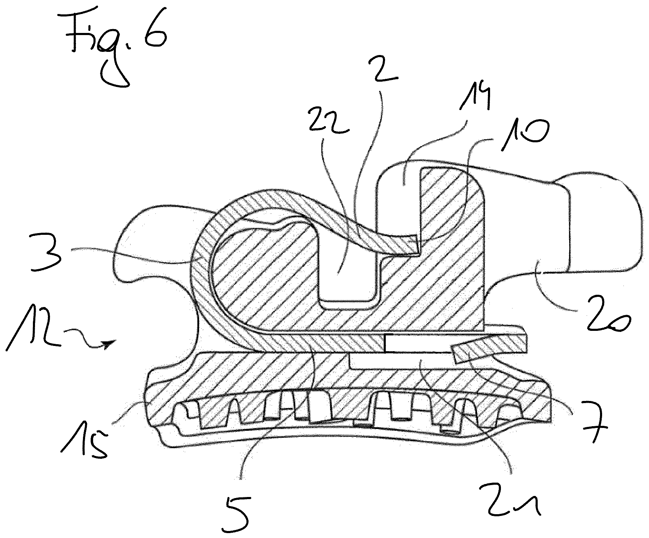

Fig. 1 and 2 show a first embodiment of a ligating clip 1 for a self-ligating orthodontic bracket 12 shown in Fig. 3 to 6, the clip 1 comprising:
- a labial arm 2 having a free end and a further end
- a lingual arm 4 having a free end and a further end
- a connecting arm 3 connected to the further ends of the labial arm 2 and the lingual arm 4
the labial arm 2, the connecting arm 3 and the lingual arm 4 each having a distal side and a mesial side, the labial arm 2 and the lingual arm 4 extending generally in a gingival-occlusal direction and the connecting arm 3 extending generally in a lingual-labial direction
- a locking element in form of a hook 7 arranged at the free end of the lingual arm 4, the hook 7 protruding in a lingual-labial direction
- at least one cutout 9 arranged at the free end of the lingual arm 4, the at least one cutout 9 being open at either the distal or the mesial side of the lingual arm 4

It can be seen, that the at least one cutout 9 has two mesial-distal borders 911, 912 and two gingival-occlusal borders 921, 922.

The hook 7, in a view along the lingual-labial direction, has a length L and is distanced from the mesial-distal borders 911, 912 and from the gingival-occlusal borders 921, 922 by at least half of its length L.

The at least one cutout 9, in a view along the lingual-labial direction, is generally L-shaped and a shape of the lingual arm 4 due to the cutout 9 is given by a gingival section 23, a protrusion 5 connected to the gingival section 23, the protrusion 5 running in the gingival-occlusal direction and having a smaller width along the mesial-distal direction than the gingival section 23, and a transversal part 6 running in the mesial-distal direction, the transversal part 6 being connected on one end to the protrusion 5 and on a further end to the hook 7.

In the embodiment of Fig. 1 to 6 the clip 1 is provided with only one cutout 9 such that, in a view along the lingual-labial direction, the clip 1 is of asymmetric design due to the presence of the cutout 9.

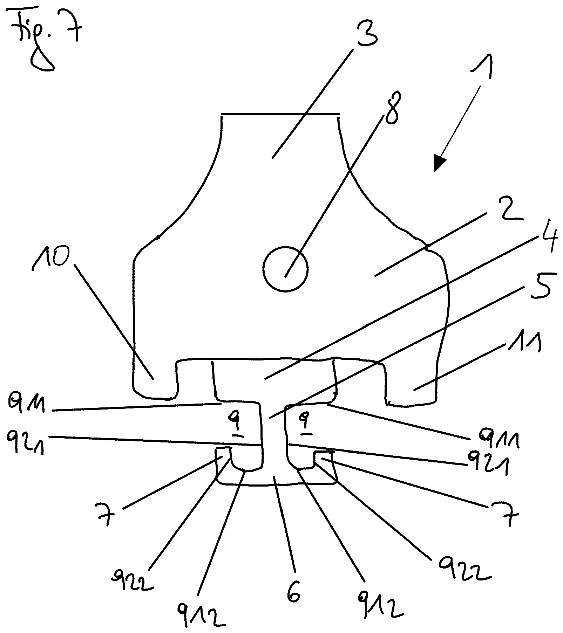

In the alternative embodiment of a clip 1 shown in Fig. 7, two cutouts 9 are provided wherein each cutout 9 and hook 7 is designed as shown in the embodiment of Fig. 1 and 2. The clip 1 of this embodiment is of a symmetric design.

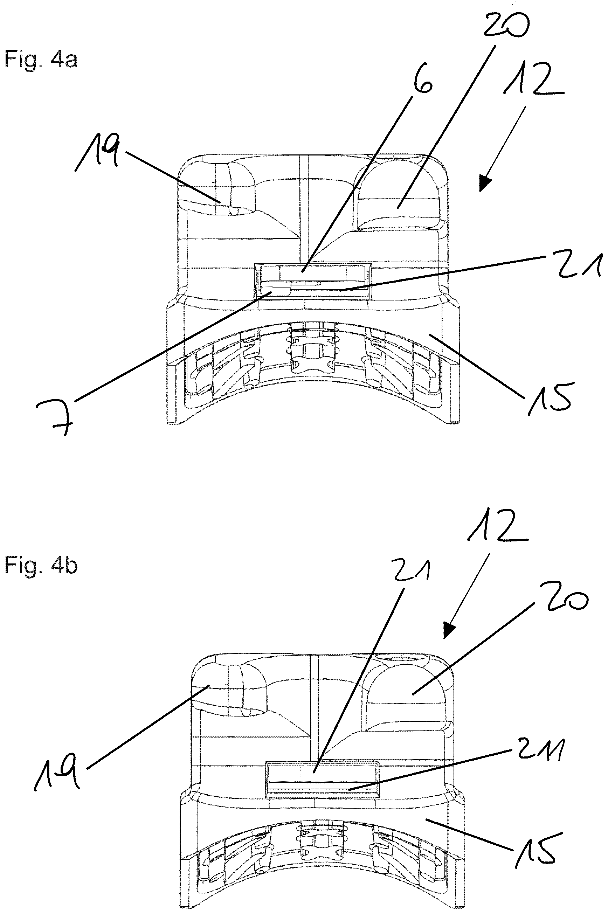

The bracket 12 is provided with an occlusal-gingival channel 21 which has two sections of different clearance and which are separated from each other by a step 211 (cf. Fig. 4b) such that, in a position in which the archwire slot 22 is open, the hook 7 acts together with step 211 to prevent a separation of the clip 1 from the bracket 12.

A base 15 of the bracket 12 can be bonded to a tooth enamel by applying adhesives between the base 15 and the enamel as is well known in the art.

The bracket 12 has an archwire slot 22 to accept an archwire (not shown).

An occlusal wall of the bracket 12 is provided with a mesial cavity 13 and a distal cavity 14 to cooperate with the fingers 10, 11. Another (medial) cavity 18 is not used in this embodiment but could be used together with a clip 1 having three fingers. Alternatively, it could be provided that the medial cavity 18 is not present.

The clip 1 can be slid open and closed with the aid of an aperture 8 for a tool.

Preferably, the clip 1 is made of superelastic material, e.g, a Ni-Ti alloy.

Preferably, the clip 1 can be provided with a coating minimizing the amount of Ni leaching from the clip (in case a Ni-Ti alloy is used) and/or improving the aesthetics of the clip 1.

Preferably, the bracket 12 is made of ceramics, metals, or polymeric materials.

Optional tie-wings 16, 17, 19, 20 can be used to apply bands.

### List of reference signs:

- 1: ligating clip for a self-ligating orthodontic bracket
- 2: labial arm of clip
- 3: connecting arm of clip
- 4: lingual arm of clip
- 5: protrusion of lingual arm of clip
- 6: transversal part of lingual arm of clip
- 7: hook
- 8: aperture for tool
- 9: cutout
911 first mesial-distal border of cutout
912 second mesial-distal border of cutout
921 first gingival-occlusal border of cutout
922 second gingival-occlusal border of cutout

- 10: distal finger of clip
- 11: mesial finger of clip
- 12: self-ligating orthodontic bracket
- 13: mesial cavity in occlusal wall of bracket
- 14: distal cavity in occlusal wall of bracket
- 15: base of bracket
- 16: first gingival tie-wing
- 17: second gingival tie-wing
- 18: medial cavity in occlusal wall of bracket
- 19: first occlusal tie-wing
- 20: second occlusal tie-wing
- 21: occlusal-gingival channel
211 step in occlusal-gingival channel

- 22: archwire slot
- 23: gingival section of lingual arm

- L: length of hook in a view along the lingual-labial direction

## Claims

1. A ligating clip (1) for a self-ligating orthodontic bracket (12), comprising:
- a labial arm (2) having a free end and a further end
- a lingual arm (4) having a free end and a further end
- a connecting arm (3) connected to the further ends of the labial arm (2) and the lingual arm (4)
the labial arm (2), the connecting arm (3) and the lingual arm (4) each having a distal side and a mesial side, the labial arm (2) and the lingual arm (4) extending generally in a gingival-occlusal direction and the connecting arm (3) extending generally in a lingual-labial direction
- a locking element in form of a hook (7) arranged at the free end of the lingual arm (4), the hook (7) protruding in a lingual-labial direction
**characterized in that**
at least one cutout (9) is arranged at the free end of the lingual arm (4), the at least one cutout (9) being open at either the distal or the mesial side of the lingual arm (4).

2. The clip of claim 1, wherein the at least one cutout (9) has at least one mesial-distal border (911, 912) and at least one gingival-occlusal border (921, 922).

3. The clip of one of the preceding claims, wherein the hook (7), in a view along the lingual-labial direction, has a length (L) and is distanced from at least one mesial-distal border (911, 912) and from at least one gingival-occlusal border (921, 922) by at least half of its length (L).

4. The clip of one of the preceding claims, wherein the at least one cutout (9), in a view along the lingual-labial direction, is generally L-shaped.

5. The clip of the preceding claim, wherein a shape of the lingual arm (4) due to the cutout (9) is given by a gingival section (23), a protrusion (5) connected to the gingival section (23), the protrusion (5) running in the gingival-occlusal direction and having a smaller width along the mesial-distal direction than the gingival section (23), and, preferably, a transversal part (6) running in the mesial-distal direction, the transversal part (6) being connected on one end to the protrusion (5) and on a further end to the hook (7).

6. The clip of one of the preceding claims, wherein the labial arm (2) is provided, preferably only, with a mesial finger (11) and a distal finger (10).

7. The clip of one of the preceding claims, wherein the hook (7) protrudes from a lingual surface of the lingual arm (4).

8. The clip of one of the preceding claims, wherein the clip (1) is provided with only one cutout (9) such that, in a view along the lingual-labial direction, the clip (1) is of asymmetric design due to the presence of the cutout (9).

9. A self-ligating orthodontic bracket (12) comprising a clip (1) according to at least one of the preceding claims.

10. The bracket of the preceding claim, wherein the bracket (12) is provided with an occlusal-gingival channel (21) which has two sections of different clearance and which are separated from each other by a step (211) such that, in a position in which the archwire slot (22) is open, the hook (7) acts together with step (211) to prevent a separation of the clip (1) from the bracket (12).

## Patentansprüche

1. Eine Ligaturklemme (1) für ein selbstligierendes kieferorthopädisches Bracket (12), umfassend:
▪ einen labialen Arm (2) mit einem freien Ende und einem weiteren Ende
▪ einen lingualen Arm (4) mit einem freien Ende und einem weiteren Ende
▪ einen Verbindungsarm (3), welcher mit den weiteren Enden des Labialarms (2) und des Lingualarms (4) verbunden ist,
wobei der Labialarm (2), der Verbindungsarm (3) und der Lingualarm (4) jeweils eine distale Seite und eine mesiale Seite aufweisen, wobei sich der Labialarm (2) und der Lingualarm (4) grundsätzlich in einer gingival-okklusalen Richtung erstrecken und sich der Verbindungsarm (3) grundsätzlich in einer lingual-labialen Richtung erstreckt
▪ ein Verriegelungselement in Form eines Hakens (7), welches am freien Ende des lingualen Arms (4) angeordnet ist, wobei der Haken (7) in einer lingual-labialen Richtung hervorsteht,
**dadurch gekennzeichnet, dass**
wenigstens eine Aussparung (9) am freien Ende des Lingualarms (4) angeordnet ist, wobei die wenigstens eine Aussparung (9) entweder an der distalen oder an der mesialen Seite des Lingualarms (4) offen ist.

2. Die Klemme nach Anspruch 1, wobei die wenigstens eine Aussparung (9) wenigstens eine mesial-distale Begrenzung (911, 912) und wenigstens eine gingival-okklusale Begrenzung (921, 922) aufweist.

3. Die Klemme nach einem der vorhergehenden Ansprüche, wobei der Haken (7) in einer Ansicht entlang der lingual-labialen Richtung eine Länge (L) aufweist, und von wenigstens einer mesial-distalen Begrenzung (911, 912) und von wenigstens einer gingivalen okklusalen Begrenzung (921, 922) um wenigstens die Hälfte seiner Länge (L) beabstandet ist.

4. Die Klemme nach einem der vorhergehenden Ansprüche, wobei die wenigstens eine Aussparung (9) in einer Ansicht entlang der lingual-labialen Richtung grundsätzlich L-förmig ist.

5. Die Klemme nach dem vorhergehenden Anspruch, wobei eine Form des lingualen Arms (4) aufgrund der Aussparung (9) gegeben ist durch einen gingivalen Abschnitt (23), einen mit dem gingivalen Abschnitt (23) verbundenen Vorsprung (5), wobei der Vorsprung (5) in der gingival-okklusalen Richtung verläuft und entlang der mesial-distalen Richtung eine geringere Breite aufweist als der gingivale Abschnitt (23), und, bevorzugt einen in mesial-distaler Richtung verlaufenden transversalen Teil (6), wobei der transversale Teil (6) an einem Ende mit dem Vorsprung (5) und an einem weiteren Ende mit dem Haken (7) verbunden ist.

6. Die Klemme nach einem der vorhergehenden Ansprüche, wobei der labiale Arm (2), bevorzugt nur, mit einem mesialen Finger (11) und einem distalen Finger (10) vorgesehen ist.

7. Die Klemme nach einem der vorhergehenden Ansprüche, wobei der Haken (7) aus einer lingualen Oberfläche des lingualen Arms (4) hervorsteht.

8. Die Klemme nach einem der vorhergehenden Ansprüche, wobei die Klemme (1) mit nur einer Aussparung (9) vorgesehen ist, derart, dass die Klemme (1) in einer Ansicht entlang der lingual-labialen Richtung aufgrund des Vorhandenseins der Aussparung (9) asymmetrisch gestaltet ist.

9. Ein selbstligierendes kieferorthopädisches Bracket (12), umfassend eine Klemme (1) nach wenigstens einem der vorhergehenden Ansprüche.

10. Das Bracket nach dem vorhergehenden Anspruch, wobei das Bracket (12) mit einem okklusal-gingivalen Kanal (21) vorgesehen ist, welcher zwei Abschnitte mit unterschiedlichem Abstand_aufweist, und welche voneinander durch eine Stufe (211) derart getrennt sind, dass der Haken (7) in einer Position, in welcher der Drahtbogenschlitz (22) offen ist, mit der Stufe (211) zur Verhinderung einer Trennung der Klemme (1) von dem Bracket (12) zusammenwirkt.

## Revendications

1. Pince de ligature (1) pour bracket orthodontique auto-ligaturant (12), comprenant :
- un bras labial (2) ayant une extrémité libre et une autre extrémité
- un bras lingual (4) ayant une extrémité libre et une autre extrémité
- un bras de raccordement (3) raccordé aux autres extrémités du bras labial (2) et du bras lingual (4)
le bras labial (2), le bras de raccordement (3) et le bras lingual (4) ayant chacun un côté distal et un côté mésial, le bras labial (2) et le bras lingual (4) s'étendant généralement dans une direction gingivale-occlusale et le bras de raccordement (3) s'étendant généralement dans une direction linguale-labiale
- un élément de verrouillage sous la forme d'un crochet (7) agencé au niveau de l'extrémité libre du bras lingual (4), le crochet (7) en saillie dans une direction linguale-labiale **caractérisé en ce que**
au moins une découpe (9) est agencée au niveau de l'extrémité libre du bras lingual (4), l'au moins une découpe (9) étant ouverte au niveau du côté distal ou du côté mésial du bras lingual (4).

2. Pince selon la revendication 1, dans laquelle l'au moins une découpe (9) a au moins un bord mésial-distal (911, 912) et au moins un bord gingival-occlusal (921, 922).

3. Pince selon l'une des revendications précédentes, dans laquelle le crochet (7), dans une vue dans la direction linguale-labiale, a une longueur (L) et est espacé d'au moins un bord mésial-distal (911, 912) et d'au moins un bord gingival-occlusal (921, 922) d'au moins la moitié de sa longueur (L).

4. Pince selon l'une des revendications précédentes, dans laquelle l'au moins une découpe (9), dans une vue dans la direction linguale-labiale, est généralement en forme de L.

5. Pince selon la revendication précédente, dans laquelle une forme du bras lingual (4) due à la découpe (9) est donnée par une section gingivale (23), une saillie (5) raccordée à la section gingivale (23), la saillie (5) s'étendant dans la direction gingivale-occlusale et ayant une largeur dans la direction mésiale-distale inférieure à la section gingivale (23), et, de préférence, une partie transversale (6) s'étendant dans la direction mésiale-distale, la partie transversale (6) étant raccordée sur une extrémité à la saillie (5) et sur une autre extrémité au crochet (7).

6. Pince selon l'une des revendications précédentes, dans laquelle le bras labial (2) est doté, de préférence uniquement, d'un doigt mésial (11) et d'un doigt distal (10).

7. Pince selon l'une des revendications précédentes, dans laquelle le crochet (7) fait saillie d'une surface linguale du bras lingual (4).

8. Pince selon l'une des revendications précédentes, dans laquelle la pince (1) est dotée d'une seule découpe (9) de telle sorte que, dans une vue dans la direction linguale-labiale, la pince (1) est de conception asymétrique en raison de la présence de la découpe (9).

9. Bracket orthodontique auto-ligaturant (12) comprenant une pince (1) selon au moins l'une des revendications précédentes.

10. Bracket selon la revendication précédente, dans lequel le bracket (12) est doté d'un canal occlusal-gingival (21) qui a deux sections de jeu différent et qui sont séparées l'une de l'autre par un palier (211) de telle sorte que, dans une position dans laquelle la fente (22) pour arc dentaire est ouverte, le crochet (7) agit conjointement au palier (211) pour empêcher que la pince (1) se sépare du bracket (12).
